Europäisches Patentamt

(19) **European Patent Office**

**Office européen des brevets**

(11) Numéro de publication: **0 022 414**
**B1**

(12) # FASCICULE DE BREVET EUROPEEN

(45) Date de publication du fascicule du brevet:
**14.03.84**

(51) Int. Cl.³: **D 06 F  39/02,** D 06 F  33/08

(21) Numéro de dépôt: **80401020.5**

(22) Date de dépôt: **04.07.80**

(54) **Ensemble d'alimentation multiple en liquide, et appareil, tel qu'une machine à laver, muni de cet ensemble.**

(30) Priorité: **06.07.79  FR 7917604**

(43) Date de publication de la demande:
**14.01.81 Bulletin 81/2**

(45) Mention de la délivrance du brevet:
**14.03.84 Bulletin 84/11**

(84) Etats contractants désignés:
**AT BE CH DE FR IT LI LU NL SE**

(56) Documents cités:
**DE - A - 2 360 572**
**DE - B - 1 129 920**
**US - A - 3 080 881**
**US - A - 3 125 112**
**US - A - 3 144 038**
**US - A - 3 154 090**
**US - A - 3 224 457**

(73) Titulaire: **THOMSON-BRANDT, 173, Boulevard Haussmann, F-75379 Paris Cedex 08 (FR)**

(72) Inventeur: **Burgel, Christian, "THOMSON-CSF" SCPI 173, Bld. Haussmann, F-75360 Paris Cedex 08 (FR)**

(74) Mandataire: **Phan, Chi Quy et al, THOMSON-CSF SCPI 173, Bld Haussmann, F-75379 Paris Cedex 08 (FR)**

Ensemble d'alimentation multiple en liquide, et appareil, tel qu'une machine à laver,
muni de cet ensemble

La présente invention concerne un ensemble d'alimentation multiple en liquide et un appareil tel qu'une machine à laver, muni de cet ensemble.

Un grand nombre d'appareils à usage industriel ou domestique exige, au cours de leur fonctionnement, une alimentation en liquide de un ou plusieurs de leurs organes composants. Dans une machine à laver, par exemple les produits adjuvants utilisés sont souvent entreposés dans des récipients distincts et leur introduction successive dans la cuve de la machine, au cours du fonctionnement de celle-ci, est réalisée fréquemment par une admission dans le récipient correspondant d'un liquide, de l'eau par exemple qui chasse le produit. Plusieurs solutions ont été déjà proposées pour cette alimentation multiple en liquide. Une de ces solutions consiste à relier individuellement chacun de ces récipients à une source de liquide à travers un robinet ou une électrovanne. Cette solution a l'avantage d'être simple mais s'avère onéreuse car elle exige dans sa mise en œuvre autant de robinets ou d'électrovannes que de récipients distincts. Une autre solution consiste à relier à une source de liquide, les différents récipients à travers un distributeur tubulaire à piston-tiroir. Ce distributeur tubulaire est d'une part connecté par ses deux extrémités, à cette soure de liquide, respectivement à travers deux électrovannes ou une électrovanne double, et d'autre part relié en des points espacés de son corps à ces récipients. Selon une ouverture isolée, alternée ou simultanée de ces deux électrovannes ou de cette électrovanne double, le piston-tiroir est poussé dans une de ses positions par le liquide admis et met alors cette source de liquide en communication avec un ou plusieurs de ces récipients. Cette solution reste onéreuse bien qu'elle ramène le nombre d'électrovannes de commande à deux pour un nombre supérieur à deux, de récipients à alimenter. En outre, le système piston-tiroir de ce distributeur ne permet pas à certains de ces récipients d'être alimentés séparément.

La présente invention ayant pour but d'éviter ces inconvénients, permet de réaliser un ensemble économique d'alimentation multiple en liquide pouvant fournir du liquide à chacun des organes récepteurs, séparément, quel que soit le nombre de ces derniers et un appareil tel qu'une machine à laver, muni de cet ensemble d'alimentation multiple en liquide.

L'invention concerne un ensemble d'alimentation multiple en liquide, du genre décrit dans le brevet US-A-3 224 457 ayant un moyen tel qu'une unique électrovanne simple assurant la commande de l'admission d'un liquide à son entrée et un système de liaison reliant son entrée avec ses n sorties comprenant un système à clapets commandés par le liquide admis suivant une séquence spécifique déterminée par un nombre fixe d'ouvertures et de fermetures de cette électrovanne. L'ensemble est caractérisé en ce qu'il comprend en vue de pouvoir alimenter en liquide individuellement et séparément de chacune de ces sorties, au moins, comme système de liaison entre son unique entrée et ses n sorties, (n−1)-dispositifs de guidage de liquide, montés en cascade, à trois voies et muni de leur propre clapet commandé individuellement par le liquide admis suivant une séquence spécifique déterminée par un nombre fixe d'ouvertures et de fermetures à durées fixées de cette électrovanne, et dans le trajet du liquide admis, en aval de chacun de ses dispositifs de guidage, un trou de mise en communication avec l'extérieur, à dimension préétablie.

Pour mieux faire comprendre l'invention on décrit ci-après à titre indicatif un certain nombre d'exemples de réalisation illustrés par des dessins ci-annexés dont

— la figure 1 représente une vue schématique en perspective d'un appareil réalisé suivant l'invention, présenté sous forme d'une machine à laver le linge;

— la figure 2 représente, à une autre échelle, une vue en coupe longitudinale d'un ensemble d'alimentation multiple en liquide, selon un premier exemple de réalisation de l'invention;

— la figure 3 représente, à une autre échelle, une vue en coupe longitudinale d'un ensemble d'alimentation multiple en liquide, selon un deuxième exemple de réalisation de l'invention;

— la figure 4 représente, une vue en coupe transversale suivant IV-IV de l'ensemble de la figure 3;

— la figure 5 représente, une vue en coupe transversale suivant V-V de l'ensemble de la figure 3;

— la figure 6 représente, une vue schématique d'un ensemble d'alimentation multiple en liquide, selon un troisième exemple de réalisation de l'invention;

— la figure 7 représente, une vue schématique des première et deuxième variantes de réalisation de l'ensemble de la figure 6;

— la figure 8 représente, une vue partielle et schématique d'une troisième variante de réalisation de l'ensemble de la figure 6;

— la figure 9 représente, une vue d'une crépine faisant partie de la variante de réalisation illustrée dans la figure 8;

— la figure 10, représente une vue schématique d'une quatrième variante de réalisation de l'ensemble de figure 6, et

— la figure 11 représente, une vue schématique d'une cinquième variante de réalisation de l'ensemble de la figure 6.

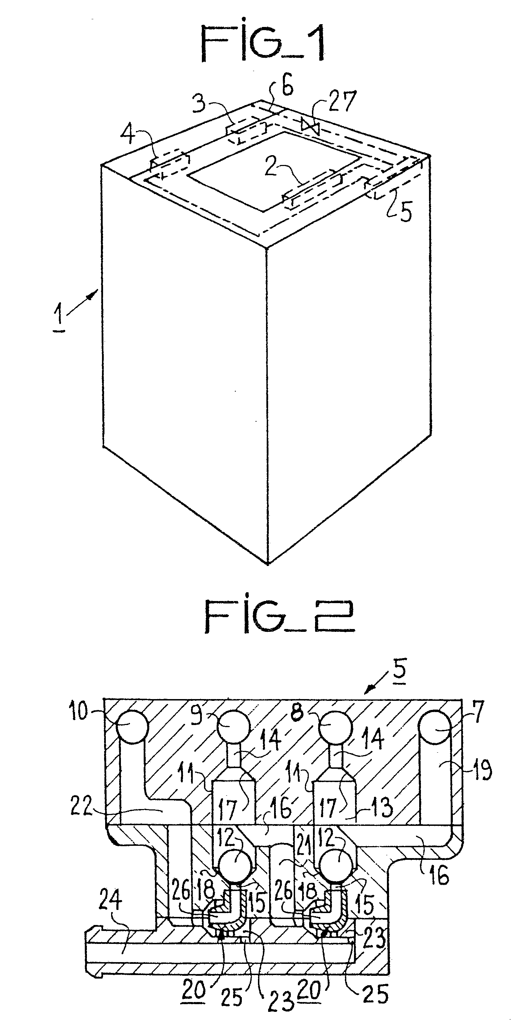

Un appareil réalisé selon l'invention, illustré dans la figure 1 est présenté sous la forme d'une machine à laver le linge 1. La machine 1 comprend plusieurs organes récepteurs-distributeurs qui exigent, au cours de leur fonctionnement, une alimentation en liquide. Ces organes peuvent être par exemple, un récipient à produit de lavage 2, un récipient à eau de Javel 3, un récipient à assouplissant 4. Dans la machine 1, ces trois récipients sont reliés à travers un ensemble d'alimentation multiple en liquide 5, à une source de liquide, représentée schématiquement par une canalisation de distribution d'eau 6.

Selon l'invention, l'ensemble d'alimentation multiple en liquide 5 illustré dans les figures 1 et 2, comprend dans son corps, une entrée unique de liquide 7 et n sorties de liquide trois sorties 8, 9, 10 par exemple. Ces n sorties de liquide sont reliées à cette entrée de liquide 7 par $(n-1)$-dispositifs de guidage de liquide 11 montés en cascade. Ces dispositifs de guidage 11 sont constitués par des dispositifs à trois voies en T et à clapet 12 commandé individuellement par le liquide admis suivant une séquence spécifique. Les dispositifs de guidage 11 illustrés comprennent chacun une cavité tubulaire en T couché horizontalement ayant un corps central 13 représentant des bras du T prolongé par deux parties terminales tubulaires 14 et 15 à section transversale plus faible que celle de ce corps et constituant une première et une deuxième voies et une partie centrale tubulaire 16 représentant le corps de ce T, constituant une troisième voie. Les parois 17, 18 reliant le corps central 13 et les parties terminales tubulaires 14 et 15 de cette cavité en T constituent les sièges supérieur et inférieur du clapet 12. Le clapet 12 est libre dans le corps central 13. Le clapet 12 peut se déplacer entre les sièges 17, 18 sur le long du corps central 13 de la cavité en T pour assurer l'ouverture et la fermeture des voies constituées par les parties terminales des bras du T. La partie terminale tubulaire supérieure 14 du dispositif 11 est reliée à une des sorties de l'ensemble 5. La partie terminale inférieure 15 de ce dispositif est mise en communication avec la partie centrale 16 d'un dispositif de guidage 11 qui suit ou la dernière sortie. La partie centrale tubulaire 16 du premier dispositif 11 est reliée à l'entrée 7 de l'ensemble d'alimentation multiple en liquide.

Dans l'exemple illustré à la figure 2, deux dispositifs 11 ont été utilisés pour relier les trois sorties 8, 9, 10 à l'entrée 7 du dispositif d'alimentation multiple 5.

La partie centrale tubulaire 16 du premier dispositif est reliée à l'entrée de liquide 7 par une canalisation de jonction 19. La partie terminale tubulaire supérieure 14 est mise en communication avec la première sortie de liquide 8, et sa partie terminale tubulaire 15 est connectée à la partie centrale tubulaire 16 du deuxième dispositif 11, à travers un système à fuite de liquide 20 et une canalisation de jonction 21. La partie terminale tubulaire supérieure 14 du deuxième dispositif 11 est branchée à la deuxième sortie de liquide 9 et sa partie terminale tubulaire inférieure 15 est reliée à la troisième sortie de liquide 10 à travers un système à fuite de liquide 20 et une canalisation de jonction 22.

Le système à fuite de liquide 20 représenté comprend d'une part une cavité à fuite 23 qui met la partie terminale tubulaire inférieure 15 du dispositif 11 en communication d'un côté avec une canalisation de jonction et de l'autre avec l'extérieur à travers un trou 25 à dimension préétablie, et, d'autre part, une buse d'injection 26 prolongeant la partie terminale tubulaire inférieure 15 du dispositif 11 à travers cette cavité 23 jusqu'à une faible distance et au niveau axial de l'entrée de cette canalisation de jonction et formant un dispositif à effet venturi.

Les trous 25 de mise en communication avec l'extérieur peuvent être débouchés dans un collecteur 24 qui s'ouvre vers l'extérieur.

Dans l'exemple illustré dans la figure 2, le clapet 12 est constitué par une bille réalisée en un matériau ayant une densité inférieure à celle du liquide admis, traversant le dispositif 11. Quand il s'agit de l'eau, la bille a une densité inférieure à 1. Le déplacement de ce clapet 12 de l'un de ses sièges à l'autre, à l'intérieur du corps 13 de la cavité T d'un dispositif 11 est commandé par le liquide qui, selon une caractéristique de l'invention, y est admis à travers une électrovanne 27 (figure 1) suivant une séquence spécifique déterminée par un nombre fixe d'ouvertures et de fermetures à durées fixées de cette électrovanne 27.

Dans l'exemple illustré dans la figure 2, les clapets 12 sont au repos, appliqués par leur poids, sur leur siège inférieur 18, et ferment respectivement les parties terminales tubulaires inférieures 15 des dispositifs 11. Lors d'une première admission de liquide dans l'ensemble 5 par l'ouverture de l'électrovanne 27, le liquide passe par l'entrée 7, traverse la canalisation de jonction 19, la partie centrale tubulaire 16 et entre dans le corps central 13 du premier dispositif 11. Sous la pression d'entrée du liquide, le clapet 12 est maintenu appliqué contre son siège inférieur 18 et ferme la partie terminale tubulaire inférieure 15 du premier dispositif 11. Le liquide admis est obligé de suivre la seule voie libre constituée par la partie terminale tubulaire supérieure 14 du premier dispositif 11 et s'échappe par la première sortie 8. C'est une alimentation en liquide par la première sortie 8. Si l'on ferme maintenant l'électrovanne 27, le clapet 12, libéré de pression du liquide admis, quitte son siège inférieur 18 et remonte à son siège supérieur 17 sous l'effet de flottabilité. Le liquide résiduel se trouvant dans l'ensemble 5 descend dans la première cavité à fuite 23 et sort par le trou 25 dans le collecteur 24. La dimension du trou 25 de mise en communication avec l'extérieur est déterminée de manière à maintenir le corps 13 du dispositif 11 suffisamment rempli de liquide résiduel pendant un temps choisi appelé temps de temporisation pour garder le clapet près de son siège supérieur 17. Si, à l'intérieur des limites de ce temps de temporisation, on ouvre de nouveau l'électrovanne 27, le liquide admis traverse le premier dispositif 11 par sa partie terminale tubulaire inférieure 15, la première sortie 8 étant fermée par le clapet flottant 12. Le liquide admis continue son chemin à travers la buse 26, la canalisation de jonction 21 et entre dans le deuxième dispositif 11. Le clapet 12 du deuxième dispositif 11 étant sur son siège inférieur 18 est maintenu appliqué contre ce siège par la pression du liquide admis, et ferme de ce fait, la partie terminale tubulaire inférieure 15. Le liquide admis se dirige alors vers la partie terminale tubulaire supérieure 14 du deuxième dispositif 11 et s'échappe par la deuxième sortie 9 de l'ensemble 5. Le liquide admis continue à prendre cette deuxième sortie 9 si l'ouverture de l'électrovanne 27 est maintenue. C'est une alimentation en liquide par la deuxième sortie 9.

Si l'on ferme de nouveau l'électrovanne 27, l'admission de liquide dans l'ensemble 5 est arrêtée et le clapet 12 du deuxième dispositif 11 quitte son siège inférieur 18 pour rejoindre son siège supérieur 17, sous l'effet de flottabilité.

Le liquide résiduel dans l'ensemble 5 descend dans la première et la deuxième cavité à fuite 23 et sort respectivement par les trous 25 dans le collecteur de fuite 24.

Si dans les limites du temps de temporisation, le liquide est de nouveau introduit dans l'ensemble 5 par une ouverture de l'électrovanne 27, le liquide admis pousse les clapets flottants 12, contre leur siège supérieur 17. La première sortie 8 et la deuxième sortie 9 sont ainsi fermées. Le liquide admis traverse alors les deux dispositifs 11 pour atteindre la canalisation de jonction 22 et la troisième sortie 10 de l'ensemble 5.

C'est une alimentation en liquide par la troisième sortie 10.

Si l'on ferme de nouveau l'électrovanne 27, l'admission du liquide dans l'ensemble 5 est arrêtée. Quand la durée de fermeture de l'électrovanne 27 dépasse le temps de temporisation, le liquide résiduel s'évacue complètement des deux dispositifs de guidage 11 par les trous 25, et les clapets 12 retournent, par gravité, à leur position de repos et se reposent sur leur siège inférieur 18 respectif. L'ensemble d'alimentation multiple 5 retrouve son état de repos.

En résumé, l'ensemble 5 étant au repos, pour alimenter en liquide par la première sortie 8, on ouvre simplement l'électrovanne 27, le liquide admis traverse la canalisation de jonction 19, entre dans le premier dispositif de guidage 11 et s'échappe par cette sortie 8. Pour alimenter en liquide par la deuxième sortie 9, les clapets 12 sont commandés par le liquide, admis suivant une séquence spécifique rappelée ci-après. En effet, au départ, l'ensemble 5 étant dans son état de repos, l'électrovanne 27 est ouverte une première fois pour une durée fixée permettant un juste remplissage en liquide du seul premier dispositif de guidage 11 puis refermée pendant une durée fixée, inférieure au temps de temporisation pour laisser le clapet 12 quitter son siège inférieur 18 et rejoindre son siège supérieur 17, et enfin réouverte une deuxième fois, pour le temps de l'alimentation souhaitée, le liquide admis traverse alors la canalisation de jonction 19, la partie inférieure du corps central 13 du premier dispositif 11, la buse 26, la canalisation de jonction 21, la partie supérieure du corps central 13 du deuxième dispositif 11 et s'échappe par la deuxième sortie 9. On remarque dans cette opération d'alimentation en liquide par la deuxième sortie 9 que les durées d'ouverture et de fermeture de l'électrovanne 27 pour la commande des clapets 12 sont respectivement fixées, et qu'aucune quantité de liquide n'échappe par la première sortie 8 de l'ensemble 5. Dans le cas où pour cette opération d'alimentation en liquide par la deuxième sortie 9, une fuite d'une certaine quantité de liquide par la première sortie 8 n'est pas prohibitive, le temps d'ouverture de l'électrovanne 27 pour la commande des clapets 12 peut dépasser la durée fixée autrement-dit ce temps peut être supérieur au temps nécessaire au juste remplissage en liquide du premier dispositif 11.

Pour alimenter en liquide par la troisième sortie 10, les clapets 12 sont commandés par le liquide admis suivant une séquence spécifique, rappelée ci-après.

En effet, l'ensemble 5 étant dans son état de repos, l'électrovanne 27 est ouverte une première fois pour une durée fixée permettant un juste remplissage en liquide du premier dispositif 11, puis refermée une première fois pendant une durée fixée inférieure au temps de temporisation pour laisser le clapet 12 de ce premier dispositif 11 quitter son siège inférieur 18 et rejoindre son siège supérieur 17 afin de fermer la première sortie 8, ensuite réouverte une deuxième fois pour une durée fixée permettant un juste remplissage en liquide du deuxième dispositif 11, puis refermée une deuxième fois pendant une durée fixée inférieure au temps de temporisation pour laisser le clapet 12 de ce deuxième dispositif 11 quitter son siège inférieur 18 et rejoindre son siège supérieur 17 afin de fermer la deuxième sortie 9, enfin réouverte une troisième fois pour le temps de l'alimentation souhaitée, le liquide admis traverse alors les deux dispositifs 11, la canalisation de jonction 22 et s'échappe par la troisième sortie 10.

Etant donné que les dispositifs 11 ont une même structure, d'une part, les durées fixées d'ouvertures de l'électrovanne 27 pour la commande des deux clapets 12 sont égales entre elles, et d'autre part, les durées fixées de fermetures de cette électrovanne 27 pour la commande de ces clapets 12 sont entre elles identiques.

Dans l'ensemble d'alimentation multiple en liquide, les dispositifs de guidage 11 peuvent se trouver à une même hauteur (figure 2) ou à de niveaux différents, un dispositif 11 précédent se trouvant à un niveau inférieur à un dispositif 11 suivant. L'ensemble 5 peut être réalisé en plusieurs parties, trois par exemple (figure 2) qui sont assemblées par des moyens de fixation connus non représentés. Les buses 26 sont mises en place par exemple lors de l'assemblage de l'ensemble 5. Au cours de la circulation du liquide admis, ces buses 26 créent respectivement avec les cavités à fuite 23 et les canalisations de liaison 21 et 22, un effet de venturi qui réduit au minimum la fuite en liquide par les trous 25.

Selon une variante de réalisation, illustrée dans les figures 3, 4 et 5, l'ensemble d'alimentation multiple en liquide 28 comprend une entrée unique de liquide 29 et n sorties de liquide, trois par exemple 30, 31 et 32. Ces n sorties sont reliées à l'entrée unique de liquide 29, par (n − 1) dispositifs de guidage 33 montés en cascade et constitués d'une manière analogue à ceux du premier exemple, par des dispositifs à trois voies en T et à clapet 34 commandé par le liquide admis. Les dispositifs de guidage 33 comprennent chacun un siège inférieur 35 et un siège supérieur 36 pour le clapet 34. Dans l'ensemble 28, l'entrée du liquide 29 est branchée, comme dans l'exemple de la figure 1, à une source de liquide 6, à travers une électrovanne 27, et reliée à la partie tubulaire centrale 37 du premier dispositif de guidage 33.

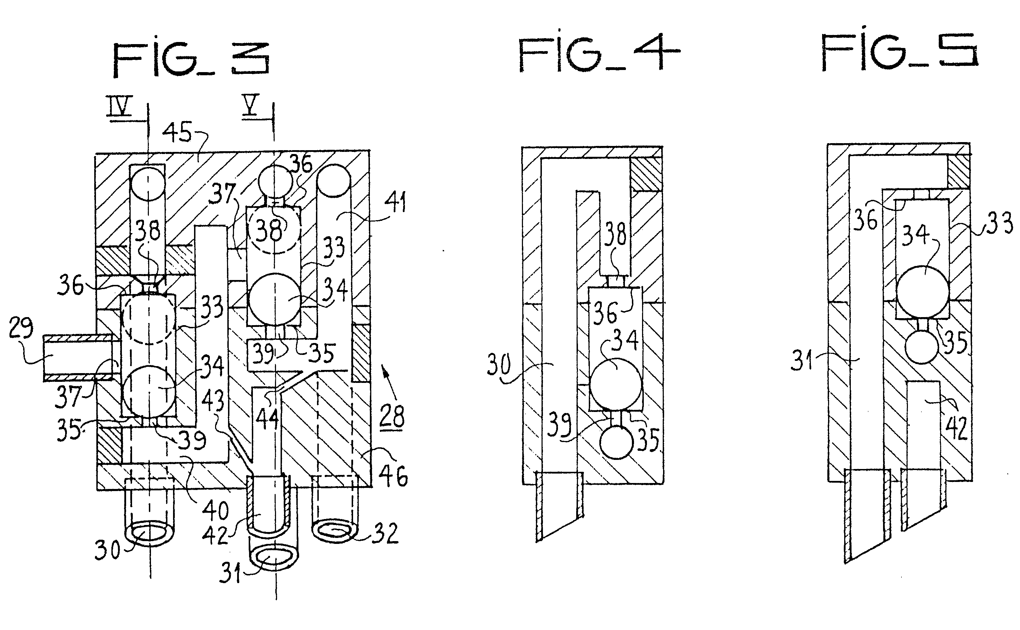

La première sortie 30 de cet ensemble 28, affectant la forme d'un siphon (figure 4) est reliée à la partie terminale tubulaire supérieure 38 de ce premier dispositif 33 et la partie terminale tubulaire inférieure 39 de celui-ci est mise en communication avec la partie centrale tubulaire 37 du deuxième dispositif 33 par l'intermédiaire d'une canalisation de jonction 40. La partie terminale tubulaire supérieure 38 du deuxième dispositif 33 est reliée à la deuxième sortie 31 en forme de siphon (figure 5) de l'ensemble 28 et la partie terminale tubulaire inférieure 39 de ce deuxième dispositif 33 est branchée à la troisième sortie 32 par le moyen d'une canalisation de jonction 41. En aval des dispositifs 33, ces canalisations de jonction 40 et 41 sont respectivement mise en communication avec l'extérieur par des trous 43, 44 qui débouchent dans un collecteur 42.

Dans une variante illustrée (figures 3 à 5) le clapet 34 est constitué par une bille réalisée en un matériau ayant une densité inférieure ou voisine de la densité du liquide admis dans l'ensemble 28.

Au repos les clapets 34 reposent sur leurs sièges inférieurs 35. Quand l'électrovanne 27 est ouverte, le liquide pénètre dans le premier dispositif de guidage 33 par l'entrée 29, maintient le clapet 34 sur on siège inférieur 35 et s'échappe par la première sortie 30 à travers la partie terminale tubulaire supérieure de ce premier dispositif 33. C'est une alimentation en liquide par la première sortie 30. Si l'électrovanne 27 est ouverte pour une durée fixée permettant un juste remplissage en liquide du premier dispositif 33, et refermée, le clapet 34 quitte son siège inférieur 35 pour rejoindre son siège supérieur 36, sous l'effet de flottabilité. Dans le cas où une fuite de liquide par la première sortie 30 n'est pas prohibitive, la durée fixée de la première ouverture peut être dépassée. Si la densité du clapet 34 est voisine de celle du liquide admis, le mouvement ascendant de ce clapet 34 est alors aidé et accéléré par l'effet d'aspiration engendré par le siphonage provoqué par l'évacuation du liquide résiduel se trouvant dans le premier dispositif 33 par la première sortie 30 en forme de siphon, due à la présence du trou 43 de mise en communication avec l'extérieur, c'est-à-dire avec l'air.

Si l'électrovanne 27 est réouverte une deuxième fois, après une durée fixée de fermeture, le liquide admis traverse le premier dispositif 33 par la partie terminale tubulaire inférieure 39, entre dans la canalisation de jonction 40 et le deuxième dispositif 33 et s'échappe par la partie terminale tubulaire supérieure 38 de ce deuxième dispositif 33 et la deuxième sortie 31 en forme de siphon, le clapet 34 du deuxième dispositif 28 étant appliqué sur son siège inférieur 35. Une faible quantité tolérée du liquide admis, s'échappe également par le trou 43, à dimension préétablie. C'est une alimentation en liquide par la deuxième sortie 31.

Si l'électrovanne 27 est alternativement ouverte deux fois pour une durée fixée et fermée deux fois pour une autre durée fixée, le liquide admis permet aux clapets 34 des deux dispositifs 33, de regagner leur siège supérieur 36 respectif. De préférence le deuxième dispositif 33 se trouve, dans l'ensemble 28, à un niveau supérieur à celui du premier dispositif 33, comme le montre la figure 3. Un tel décalage en hauteur de ces deux dispositifs 33 permet d'obtenir facilement un déplacement du clapet 34 du deuxième dispositif 33, de son siège inférieur 35 à son siège supérieur 36 sans perturber le clapet 34 du premier dispositif 33 qui occupait déjà sa position haute.

Si l'électrovanne 27 est maintenant réouverte une troisième fois, le liquide admis traverse les deux dispositifs 33, entre dans la canalisation de jonction 41 et s'échappe par la troisième sortie 32. C'est une alimentation en liquide par la troisième sortie 32.

Le fonctionnement de l'ensemble 28 est ainsi analogue à celui de l'ensemble 5. Les clapets 34 des dispositifs 33 sont également commandés par le liquide admis dans l'ensemble 28 selon une séquence spécifique déterminée par un nombre fixe d'ouvertures et de fermetures à durées fixées de l'électrovanne 27.

L'électrovanne 27 peut être commandée soit manuellement soit automatiquement par un programmateur non représenté de la machine 1.

L'ensemble 28 peut être constitué, comme le montrent les figures 3 à 5, en deux parties 45, 46 selon des techniques connues, ces parties étant assemblées par des moyens de fixation également connus non représentés.

Dans l'ensemble 28, les extrémités libres des sorties 30, 31, 32 sont de préférence taillées en sifflet. Une telle structure permet d'éviter l'inconvénient de l'effet de tension superficielle du liquide, en facilitant l'écoulement du liquide résiduel, dès la fermeture de l'électrovanne 27, et de rendre efficace le fonctionnement de l'ensemble d'alimentation multiple en liquide.

Selon un troisième exemple de réalisation, illustré schématiquement dans la figure 6, l'ensemble d'alimentation multiple en liquide 47 comprend une entrée unique de liquide 48 et n sorties de liquide, trois par exemple 49, 50, 51. Ces n sorties sont reliées à l'entrée unique de liquide 48, par (n−1) dispositifs de guidage 52, deux par exemple, montés en cascade, fonctionnant d'une manière analogue à ceux des deux premiers exemples et constitués par des dispositifs à trois voies en T et à clapet 53 commandé par le liquide admis suivant une séquence spécifique. Dans cet exemple de réalisation, les dispositifs de guidage 52 illustrés comprennent chacun une cavité tubulaire en forme d'un T couché horizontalement, ayant une partie verticale 54 représentant des bras du T, et une partie centrale horizontale 55 représentant le corps de ce T. Dans la paroi des zones des extrémités de la partie verticale 54 représentant des bras du T, du côté opposé à celui de la partie centrale horizontale 55, sont formées suivant des axes horizontaux deux parties tubulaires horizontales 56, 57, à section transversale plus faible que celle de la partie verticale 54. Ces parties tubulaires horizontales supérieure 56 et inférieure 57 du bras du T constituent une première voie et une deuxième voie tandis que cette partie centrale horizontale 55 qui représente le corps de ce T constitue une troisième voie. Cette troisième voie est reliée à travers l'entrée 48 à l'électrovanne 27 (figure 1). Un siège vertical supérieur 58 du clapet 53 est formé sur la paroi de la partie verticale 54 autour de la partie tubulaire horizontale 56 et un siège vertical inférieur 59 de ce clapet 53 est réalisé sur la paroi de cette partie verticale 54 autour de la partie tubulaire horizontale 57. Les parties terminales de la partie verticale 54 représentant des bras du T du dispositif de guidage 52 constituent des butées 60, 61 et en même temps des surfaces de repos au clapet 53 qui peut se déplacer le long de cette partie verticale 54, entre ses sièges 58 et 59. Lorsque l'électrovanne 27 est arrêtée, et le liquide dans le dispositif de guidage 52 est évacué à travers la partie tubulaire horizontale inférieure 57, le clapet 53 repose sur la butée 61 et non sur son siège vertical inférieur 59. Cet avantage de structure permet d'éviter au clapet 53 un collage éventuel à son siège inférieur 59, provoqué notamment par des dépôts d'impuretés devenues sèches après évacuation du liquide. Cet avantage eput être encore renforcée par une formation de nervures 62 sur la surface de ces butées 60 et 61 pour d'une part diminuer les forces capillaires qui, dues au film de liquide existant entre le clapet 53 et la surface plane de ces butées, perturbent le fonctionnement du clapet 53 en retenant ce dernier et d'autre part consituer un refuge ou une réserve pour des impuretés.

Dans l'ensemble 47, l'entrée du liquide 48 est branchée, comme dans l'exemple de la figure 1, à une source de liquide 6, à travers l'électrovanne 27 (figure 1) et reliée à la partie centrale tubulaire horizontale 55 d'un premier dispositif de guidage 52. La première sortie 49 de cet ensemble 47 est reliée à la partie tubulaire horizontale supérieure 56 de ce premier dispositif 52. La partie tubulaire horizontale inférieure 57 du premier dispositif 52 est mise en communication avec la partie centrale tubulaire horizontale 55 d'un deuxième dispositif 52 par l'intermédiaire d'un système tubulaire 63. La partie tubulaire horizontale supérieure 56 du deuxième dispositif 52 est reliée à la deuxième sortie 50 de l'ensemble 47, et la partie tubulaire horizontale inférieure 57 de ce deuxième dispositif 33 est branchée à la troisième sortie 51 par le moyen d'un système tubulaire 64. Pour un bon fonctionnement d'un ensemble d'alimentation en liquide tel que celui représenté à la figure 6, la structure de la première sortie tubulaire 49 revêt une importance particulière. En effet si le diamètre du tube de sortie 49 est trop grand, au cours de la phase où le clapet 53 devrait passer de sa position basse, c'est-à-dire de son siège inférieur à sa position haute, c'est-à-dire à son siège supérieur, l'air peut remonter rapidement à travers cette sortie 49, au moment de l'interruption de l'alimentation de liquide par l'électrovanne 27, et venir occuper la partie haute du dispositif 52, et le clapet 53, gêné par cet air ne peut pratiquement pas atteindre son siège supérieur 58. Si le diamètre du tube de sortie 49 est trop faible, le clapet 53 peut venir occuper facilement son siège supérieur 58. Mais lors de la phase où ce clapet 53 devrait quitter son siège supérieur et descendre au niveau de son siège inférieur 59, l'air ne peut pas remonter dans la sortie 49, la colonne de liquide reste alors emprisonnée dans cette sortie 49 et le clapet 53 restera de ce fait bloqué sur son siège supérieur. Dans un autre cas où le diamètre du tube de sortie 49 n'est pas adéquat, il peut se produire également dans cette sortie et formation de bouchons engendrés par du liquide qui se fractionne, lesquels s'opposent à la remontée de l'air. Selon l'invention pour assurer un bon fonctionnement de l'ensemble 47, il faut que le tube de sortie 49 reste plein de liquide pendant toute la période de remontée du clapet 53 vers son siège supérieur 58 et qu'après l'occupation du siège supérieur 58 par ce clapet 53, le tube de sortie 49 se vide et se remplit d'air pour faciliter dans la période de descente du clapet 53 le décollement de ce dernier de son siège supérieur 58.

Pour cet effet dans l'exemple illustré, l'ensemble 47 comprend d'une part un réservoir à liquide 65 mis à l'air libre par une ouverture 66, et relié à une partie haute du tube de sortie 49 par un tuyau 67 de diamètre prédéterminé et d'autre part un tube de sortie 49 ayant un diamètre préétabli et terminé par un ajutage 68 d'un diamètre préfixé.

Selon l'invention le diamètre du tube de sortie 49 est de préférence supérieur ou égal à 8 mm tandis que le diamètre du tuyau 67 et celui de l'ajutage 68 sont respectivement de l'ordre de 1,2 mm et 5 mm.

Dans la phase remontée du clapet 53, l'ajutage 68 avec son diamètre choisi ci-dessus empêche l'air de remonter dans le tube de sortie 49 qui est également alimenté en liquide par le réservoir de liquide 65 à travers le tuyau 67. Le dispositif de guidage 52 et le tube de sortie 49 restent donc pleins de liquide, et le clapet 53 peut remonter et occuper normalement son siège supérieur 58. Le réservoir de liquide 65 qui se vide à travers le tuyau 67 remplit le tube de sortie 49 et l'ajutage 68 et empêche l'air de remonter le long du tube de sortie 49. Cependant l'air nécessaire pour le décollement du clapet 53 de son siège supérieur 58 dans la phase de descente de ce clapet, est venu du réservoir 65 lorsque celui-ci est vide.

Les systèmes tubulaires 63 et 64 reliés aux parties tubulaires horizontales inférieures 57 des premier et deuxième dispositifs de guidage 52 comprennent dans leur partie basse chacun un dispositif à fuite de liquide ou de vidange 69. Ce dispositif 69 est constitué par un tube ou une cavité tubulaire dont le fond est muni d'un orifice de fuite 70. Le diamètre de l'orifice de fuite est déterminé en fonction du temps de vidange souhaité des dispositifs de guidage 52 et principalement du temps de descente des clapets 53 de leur siège supérieur 58 à l'axe de la partie centrale tubulaire horizontale 55 de ces dispositifs 52. Dans l'exemple illustré, le diamètre de l'orifice de fuite 70 est de l'ordre de 0,60 mm à 0,70 mm et celui du tube ou cavité tubulaire constituant le dispositif à fuite de liquide 69 est au moins égal à 8 mm. Le tube ou cavité tubulaire constituant le dispositif à fuite de liquide 69 contient au moins une charge de liquide 71 qui peut vaincre les tensions capillaires au niveau de l'orifice de fuite 70.

Dans l'exemple illustré les diamètres choisis de ce tube ou cavité tubulaire et de cet orifice de fuite 70 étant respectivement de 8 mm, et 0,60 mm, la hauteur 72 de cette charge de liquide 71 est alors de l'ordre de 48 mm.

Selon l'invention, pour créer dans le dispositif de guidage 52 une dépression qui oblige à descendre le clapet 53 qui est éventuellement retenu sur son siège supérieur par une dépression se produisant dans la partie tubulaire horizontale supérieure 56 et la sortie correspondante de l'ensemble 47, la partie tubulaire horizontale inférieure 57 du dispositif 52 doit être prolongée à l'intérieur de la charge de liquide 71 du dispositif à fuite de liquide 69. Dans l'exemple illustré, une cloison diamètrale étanche 73 dont l'extrémité est plongée dans la charge de liquide 71, divise en deux la partie supérieure de ce tube ou cavité tubulaire 69 pour obliger le liquide passant dans les systèmes 63 et 64 de traverser cette charge de liquide 71. Cette structure permet d'accentuer, durant la vidange des dispositifs 52 à travers les orifices de fuite 70, une dépression dans ces dispositifs 52, et de faciliter ainsi la descente des clapets 53.

Pour éviter toute remontée d'air dans les dispositifs de guidage 52 durant le déplacement des clapets 53 de leur siège inférieur 59 vers leur siège supérieur 58, les systèmes tubulaires 63 et 64 comprennent dans leur tronçon séparant ces dispositifs de guidage 52 et les dispositifs à fuite de liquide 69, un siphon 74 dont la contenance en liquide est au moins égale au volume du clapet 53 autrement dit au volume de liquide déplacé par ce clapet 53.

Le clapet 53 est, comme dans les exemples précédents, constitué par une bille réalisée en un matériau ayant une densité inférieure ou voisine de la densité du liquide admis dans l'ensemble 47.

Au repos les clapets 53 reposent sur les nervures 62 des surfaces de repos ou butées 61. Quand l'électrovanne 27 est ouverte, le liquide pénètre dans le premier dispositif de guidage 52 par l'entrée 48. Une partie de ce liquide traverse le siège inférieur 59 du clapet 53, la partie tubulaire horizontale inférieure 57, le siphon 74 et le dispositif de fuite 69. La fuite de liquide par l'orifice 70 crée une dépression qui attire le clapet 53 sur son siège inférieur 59. La sortie de liquide à travers le siège inférieur 59 du clapet 53 est alors fermé. La pression de liquide entrant dans le dispositif 52 renforce l'application du clapet 53 contre son siège inférieur 59. L'autre partie du liquide admis s'échappe par la première sortie 49 à travers la partie tubulaire horizontale supérieure 56 du dispositif 52. C'est une alimentation en liquide par la première sortie 49. Si l'électrovanne 27 est ouverte pour une durée fixée permettant un remplissage en liquide du premier dispositif 52, et refermée, le clapet 53 quitte son siège inférieur 59 pour rejoindre son siège supérieur 58 sous l'effet de flottabilité. Si la densité du clapet 53 est voisine de celle du liquide admis, le mouvement ascendant de ce clapet 53 est alors aidé et accéléré par l'effet d'aspiration engendré par le siphonage provoqué par l'évacuation de liquide par la première sortie 49, cette sortie 49 étant également alimentée par le réservoir de liquide 65 à travers l'orifice 67, l'air ne pouvant pas ainsi pénétrer dans cette sortie 49 et venir occuper la partie supérieure du dispositif 52 et gêner le clapet 53 dans l'occupation de son siège vertical supérieur 58.

Si l'électrovanne 27 est de nouveau réouverte après une durée fixée de fermeture, autrement dit une deuxième ouverture de cette électrovanne, le liquide admis traverse alors la partie inférieure du dispositif 52, entre dans la partie tubulaire inférieure 57 et le système tubulaire 63, c'est-à-dire le siphon 74, le dispositif de fuite 69, et pénètre dans le deuxième dispositif de guidage 52 pour s'échapper par la deuxième sortie 50. C'est une alimentation en liquide par la deuxième sortie 50.

Si l'électrovanne 27 est alternativement ouverte deux fois pour une durée prédéterminée puis fermée deux fois pour une autre durée fixée, le liquide admis permet aux clapets 53 des deux dispositifs de guidage 52 de regagner leur siège supérieur 58 respectifs. Le mouvement ascendant du clapet 53 du deuxième dispositif 52 est également aisé et accéléré par l'effet d'aspiration engendré par le siphonage provoqué par l'évacuation de liquide par la deuxième sortie 50 laquelle est également alimentée par le deuxième réservoir de liquide 65 à travers l'orifice 67 pour empêcher l'air de pénétrer dans cette deuxième sortie et de remonter cette dernière pour venir occuper la partie supérieure du deuxième dispositif 52 et de gêner ainsi le clapet 53 de ce deuxième dispositif dans l'occupation de son siège supérieur 58.

Si l'électrovanne est maintenant réouverte une troisième fois, le liquide admis traverse les deux dispositifs 52, entre dans le système tubulaire 64, c'est-à-dire le siphon 74 et le dispositif de fuite 69, et s'échappe par la troisième sortie 51. C'est une alimentation en liquide par la troisième sortie 51.

Le fonctionnement de l'ensemble 47 est ainsi analogue à ceux des exemples précédents. Les clapets 53 des dispositifs 52 sont également commandés par le liquide admis dans l'ensemble 47 selon une séquence spécifique déterminée par un nombre fixe d'ouvertures et de fermetures à durées fixées de l'électrovanne 27.

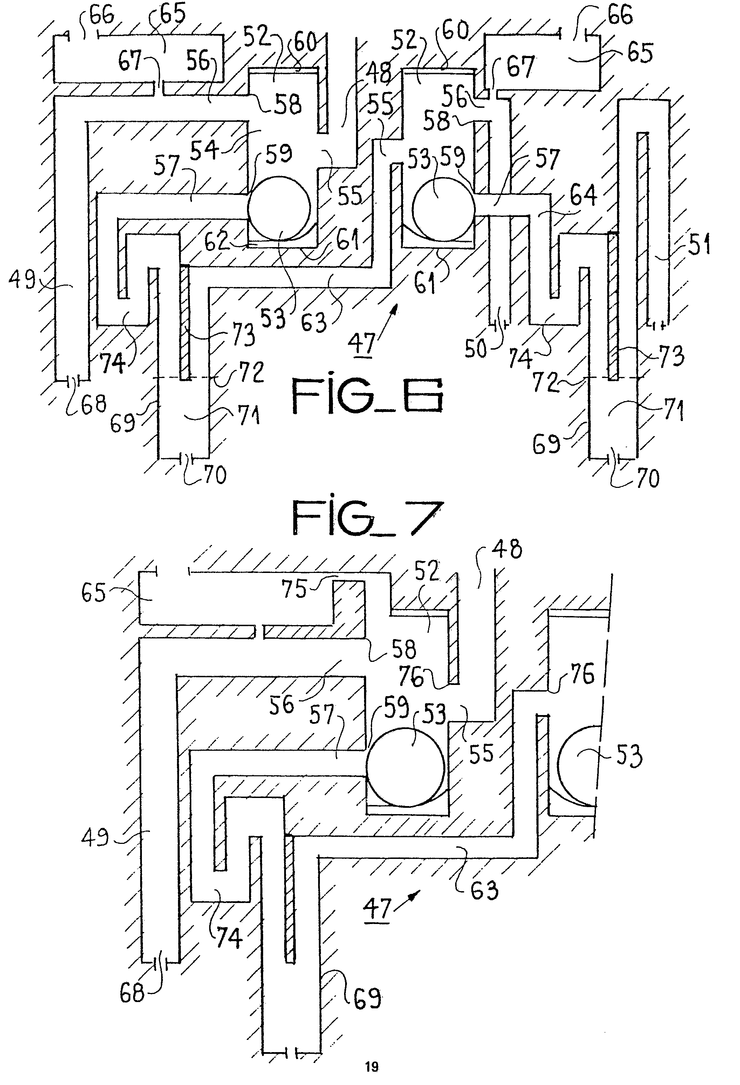

Dans une première variante de réalisation, illustrée schématiquement dans la figure 7, le réservoir de liquide 65 est alimenté par le liquide admis dans le dispositif 52 à travers un tube capillaire 75 qui relie la zone supérieure de la partie verticale 54 de la cavité du dispositif 52 et la zone supérieure du réservoir 65. Le diamètre de ce tube capillaire 75 est déterminé de manière qu'il laisse passer uniquement du liquide et que les forces capillaires de liquide qui s'y trouvent, empêchent tout passage d'air du réservoir 65 dans le dispositif de guidage 52. Dans l'exemple illustré, le diamètre de ce tube capillaire 75 est de 0,60 mm à 0,30 mm environ.

Dans une deuxième variante de réalisation illustrée schématiquement dans la figure 7, un troisième siège 76 du clapet 53 est formé autour de la partie centrale tubulaire 55 du dispositif de guidage 52. Au cas où une dépression se produit dans la source d'alimentation en liquide 6, l'électrovanne 27 étant ouverte, les deux dispositifs de guidage 52 se mettent également en dépression. Cette dépression dans le dispositif 52 est habituellement faible, si la sortie constituant par sa première voie qui est mise à l'air libre n'est pas bouchée. Au cas où cette sortie est bouchée, la dépression dans le dispositif 52 fait remonter dans ce dernier le liquide existant dans le siphon 74. Ce liquide soulève le clapet 53 qui est aspiré et appliqué contre son troisième siège 76. Lorsque le clapet ferme la partie centrale tubulaire horizontale 55, la dépression dans le dispositif 52 cesse et toute aspiration de liquide ou produits à travers les autres sorties de l'ensemble 47 est interrompue.

Tout risque de pollution de la source de liquide 6 par ces produits ou liquide aspirés durant la dépression se produisant dans celle-ci, est de ce fait évité.

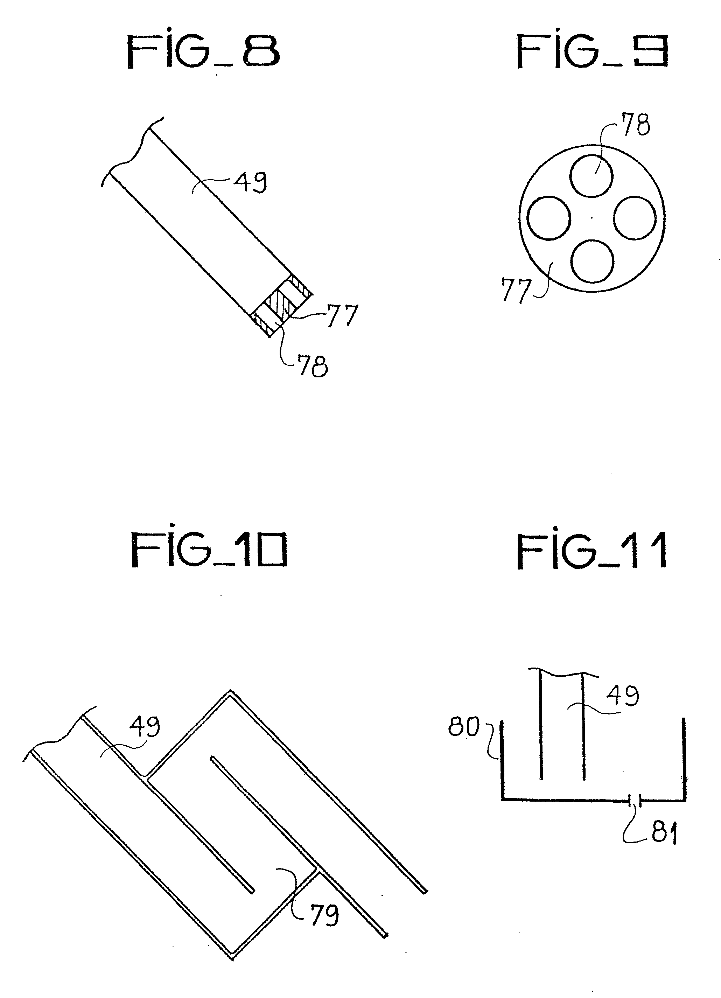

Dans une troisième variante de réalisation illustrée dans la figure 8, la première sortie 49 de l'ensemble d'alimentation multiple en liquide comprend à son extrémité, une crépine 77 qui remplace l'ajutage 68 (figures 6 et 7). La crépine 77 comporte plusieurs trous 78 ayant un diamètre plus faible que celui de l'ajutage 68. Dans l'exemple illustré dans les figures 8 et 9, le diamètre des trous 78 de la crépine 77 est de l'ordre de 2 mm à 4 mm. Cette structure a l'avantage d'une part d'augmenter la sécurité de fonctionnement étant donné que, plus le diamètre de trou 78 est faible, moins est grand le risque de remontée d'air dans la première sortie de l'ensemble d'alimentation multiple en liquide, et d'autre part de diminuer les pertes de charge sur la sortie de liquide, par une augmentation de la section totale de passage en remplaçant l'ajutage 68 par plusieurs trous 78 dans la crépine 77.

Dans une quatrième variante de réalisation illustrée dans la figure 10, la première sortie 49 de l'ensemble d'alimentation multiple en liquide comprend à son extrémité un siphon 79 rempli de liquide. Ce siphon 79 remplace l'ajutage 68 (figures 6 et 7). Cette structure a l'avantage d'empêcher une remontée d'air dans cette première sortie 49 sans pour autant augmenter les pertes de charge sur la sortie de liquide.

Dans une cinquième variante de réalisation illustrée dans la figure 11, l'ensemble 47 comprend un bac à liquide 80 pourvu d'un ajutage de vidange 81. Ce bac 80 qui remplace le réservoir à liquide 65, est disposé à l'extrémité de la première sortie 49 de l'ensemble 47. Au cours d'une alimentation en liquide de la première sortie 49, le bac à liquide 80 se remplit. Il en résulte que cette première sortie 49 ne débouche pas directement dans l'atmosphère. Une remontée d'air dans cette sortie 49 est évitée pendant l'intervalle de temps où l'extrémité de la première sortie 49 est noyée dans le liquide du bac 80. Quand le liquide est vidé de ce bac, l'air peut de nouveau remonter librement dans la sortie 49. Il en résulte qu'un ajustement du volume du bac 80 et/ou du diamètre de l'ajutage de vidange 81 de ce dernier, permet un ajustement du temps disponible pour la remontée du clapet 53 de son siège inférieur à son siège supérieur.

## Revendications

1. Ensemble d'alimentation multiple en liquide ayant un moyen tel qu'une unique électrovanne simple (27) assurant la commande de l'admission d'un liquide à son entrée et un système de liaison reliant son entrée avec ses n sorties comprenant un système à clapets commandés par le liquide admis suivant une séquence spécifique déterminée par un nombre fixe d'ouvertures et de fermetures de cette électrovanne (27), caractérisé en ce qu'il comprend, en vue de pouvoir alimenter en liquide individuellement et séparément de chacune de ces sorties, au moins, comme système de liaison entre son unique entrée (7 ou 29 ou 48) et ses n sorties, $(n-1)$ dispositifs de guidage de liquide (11 ou 33 ou 52), montés en cascade, à trois voies et muni de leur propre clapet commandé individuellement par le liquide admis suivant une séquence spécifique déterminée par un nombre fixe d'ouvertures et de fermetures à durées fixées de cette électrovanne (27), et dans le trajet du liquide admis, en aval de chacun de ses dispositifs de guidage, un trou de mise en communication avec l'extérieur (25 ou 43, 44 ou 70), à dimension préétablie.

2. Ensemble selon la revendication 1, caractérisé en ce qu'il comprend des dispositifs de guidage de liquide à trois voies (11, 33), constitués chacun par une cavité en forme d'un T couché horizontalement dont la partie terminale tubulaire supérieure (14, 38) du bras du T constituant une première voie est reliée à une des sorties correspondantes de cet ensemble, la partie terminale tubulaire inférieure (15, 39) constituant une deuxième voie est reliée soit à la partie centrale tubulaire (16, 37) représentant le corps du T du dispositif suivant, soit, pour le dernier des dispositifs de guidage montés en cascade, à la dernière des sorties de l'ensemble, et la partie centrale tubulaire (16, 37) représentant le corps du T constituant une troisième voie est reliée soit à la partie terminale tubulaire inférieure du dispositif précédent, soit, pour le premier des dispositifs de guidage montés en cascade, à l'entrée de l'ensemble.

3. Ensemble selon l'une quelconque des revendications 1 et 2, caractérisé en ce que les dispositifs de guidage de liquide à trois voies en T comprennent respectivement dans leur corps central représentant les bras du T, un clapet libre (12, 34) assurant l'ouverture et la fermeture des voies représentées par les parties terminales (14, 15, 38, 39) de ces bras du T, constitué par une bille réalisée en un matériau ayant une densité inférieure à celle du liquide admis dans ces dispositifs, et au niveau des parties terminales tubulaires de ces bras en T, des sièges supérieur et inférieur (17, 18, 35, 36) pour ce clapet.

4. Ensemble selon l'une des revendications 1 à 3, caractérisé en ce qu'il comprend des dispositifs de guidage de liquide (11) se trouvant à une même hauteur les uns par rapport aux autres.

5. Ensemble selon l'une des revendications 1 et 2, caractérisé en ce qu'il comprend des dispositifs de guidage de liquide (33) disposés de manière que l'un quelconque d'entre eux se trouve à un niveau inférieur à celui du dispositif suivant et supérieur à celui du dispositif précédent.

6. Ensemble selon l'une des revendications 1 à 5, caractérisé en ce qu'il comprend en aval des dispositifs de guidage de liquide (11), entre la partie terminale tubulaire inférieur (15) des bras du T d'un dispositif de guidage et une canalisation de jonction, une buse (26) entourée d'une cavité à fuite formant un dispositif à effet venturi.

7. Ensemble selon l'une des revendications 1, 2 et 5, caractérisé en ce qu'il comprend des sorties (30, 31, 32) réalisées respectivement suivant une forme d'un siphon.

8. Ensemble selon la revendication 7, caractérisé en ce que les dispositifs de guidage de liquide (11, 33) à trois voies en T comprennent respectivement, dans leur corps central représentant les bras du T, un clapet libre (12, 34) constitué par une bille réalisée en un matériau ayant une densité voisine de celle du liquide admis dans ces dispositifs.

9. Ensemble selon la revendication 7, caractérisé en ce qu'il comprend des sorties en forme de siphons ayant des extrémités libres taillées en sifflet (30, 31, 32).

10. Ensemble selon la revendication 1, caractérisé en ce qu'il comprend des dispositifs de guidage de liquide (52) à trois voies, constitués chacun par une cavité en forme d'un T couché horizontalement, ayant une partie verticale (54) représentant les bras du T munie dans leurs zones d'extrémité deux parties tubulaires horizontales constituant l'une (56) la première voie reliée à une première sortie (49) de cet ensemble et l'autre (57) la deuxième voie reliée soit à la partie centrale tubulaire horizontale (55) représentant le corps du T du dispositif (52) suivant par un système tubulaire (63), soit, pour le dernier des dispositifs de guidage (52) montés en cascade, à la dernière (51) des sorties de cet ensemble par un système tubulaire (64) et la partie centrale tubulaire horizontale (55) représentant le corps du T constituant la troisième voie reliée soit à la deuxième voie du dispositif (52) précédent, soit, pour le premier des dispositifs de guidage montés en cascade, à l'entrée (48) de l'ensemble.

11. Ensemble selon la revendication 10, caractérisé en ce que le système tubulaire (63, 64), relié à la deuxième voie du dispositif de guidage (52), comprend un dispositif à fuite de liquide (69) constitué par un tube ou cavité tubulaire muni d'un orifice de fuite (70) ayant un diamètre déterminé en fonction du temps de vidange du dispositif de guidage (52) et d'au moins une charge de liquide (71) pouvant vaincre les tensions capillaires au niveau de l'orifice de fuite (70).

12. Ensemble selon la revendication 11, caractérisé en ce que le système tubulaire (63, 64) comprend un dispositif à fuite de liquide (69) constitué par un tube ayant un diamètre de 8 mm, muni d'un orifice de fuite (70) de 0,60 mm, et pouvant contenir au moins une charge de liquide (71) de 48 mm de hauteur (72).

13. Ensemble selon la revendication 11, caractérisé en ce que le système tubulaire (63, 64) comprend dans le tube constituant son dispositif à fuite de liquide (69) une cloison diamétrale étanche (73) dont l'extrémité est plongée dans la charge de liquide (71) et qui divise en deux la partie supérieure de ce tube (69).

14. Ensemble selon l'une des revendications 10 à 13, caractérisé en ce que le système tubulaire (63, 64) comprend en amont de son dispositif à fuite de liquide (69) un siphon (74) ayant une contenance en liquide au moins égale à un volume de liquide déplacé par le clapet (53).

15. Ensemble selon l'une des revendications 1, 2 et 10, caractérisé en ce qu'il comprend, à l'extrémité de sa première sortie (49), un ajutage (68) ayant un diamètre inférieur à celui de cette première sortie.

16. Ensemble selon la revendication 15, caractérisé en ce qu'il comprend une première sortie (49) ayant un diamètre de 8 mm et un ajutage (68) d'un diamètre de 5 mm.

17. Ensemble selon l'une des revendications 1, 2, 10 et 15, caractérisé en ce qu'il comprend un réservoir à liquide (65) relié à un point, en amont de la sortie (49, 50) branchée à la première voie des dispositifs de guidage à trois voies (52), par un tuyau (67).

18. Ensemble selon la revendication 17, caractérisé en ce qu'il comprend un tube capillaire (75) reliant la zone supérieure du dispositif de guidage (52) et la zone supérieure du réservoir à liquide (65).

19. Ensemble selon la revendication 18, caractérisé en ce qu'il comprend un tube capillaire (75), ayant un diamètre situé entre 0,60 mm et 0,30 mm, reliant le réservoir à liquide (65) au dispositif de guidage (52).

20. Ensemble selon la revendication 1, 2 et 10, caractérisé en ce qu'il comprend, à l'extrémité de sa première sortie (49), une crépine (77) munie de plusieurs trous ayant un diamètre inférieur à celui de cette première sortie (49).

21. Ensemble selon la revendication 20, caractérisé en ce qu'il comprend à l'extrémité de sa première sortie (49) une crépine (77) munie de trous ayant un diamètre situé entre 2 mm et 4 mm.

22. Ensemble selon la revendication 1, 2 et 10, caractérisé en ce qu'il comprend à l'extrémité de sa première sortie (49) un siphon (79) rempli de liquide.

23. Ensemble selon la revendication 1, 2 et 10, caractérisé en ce qu'il comprend à l'extrémité de sa première sortie (49) un bac à liquide (80) muni d'un orifice de vidange (81).

24. Appareil muni de n organes récepteurs de liquide et d'une électrovanne (27) assurant la commande de l'admission de liquide, caractérisé en ce qu'il comprend un ensemble d'alimentation multiple en liquide à n sorties, réalisé selon l'une quelconque des revendications 1 à 23, qui relie ces n organes recepteurs de liquide à cette électrovanne (27) de commande d'admission de liquide.

## Patentansprüche

1. Baugruppe zur Mehrfach-Flüssigkeitseinspeisung mit einer Einrichtung wie einem einzigen Einfach-Elektroventil (27), das die Steuerung der Flüssigkeitszufuhr gewährleistet, und mit einem Verbindungssystem, welches ihren Einlaß mit ihren n Ausgängen verbindet und ein System von Klappen umfaßt, die durch die eingeleitete Flüssigkeit gemäß einer spezifischen Folge gesteuert werden, die durch eine feste Anzahl von Öffnungs- und Schließvorgängen dieses Elektroventils (27) bestimmt ist, dadurch gekennzeichnet, daß die zur individuellen und getrennten Flüssigkeitsspeisung jedes dieser Ausgänge wenigstens, als Verbindungssystem zwischen ihrem einzigen Einlaß (7 oder 29 oder 48) und ihren n Ausgängen, (n−1) in Kaskade angeordnete Dreiweg-Flüssigkeitsführungsvorrichtungen (11, 33 oder 52) umfaßt, die jeweils ihre eigene Klappe aufweisen, welche individuell durch die eingeleitete Flüssigkeit gemäß einer spezifischen Folge gesteuert wird, die durch eine feste Anzahl von Öffnungs- und Schließvorgängen dieses Elektroventils (27) mit jeweils fester Dauer bestimmt wird, und auf dem Weg der eingeleiteten Flüssigkeit in Strömungs-richtung hinter jeder dieser Führungsvorrichtun-gen ein Loch (25 oder 43, 44 oder 70) aufweist, welches eine Verbindung mit der Außenseite herstellt und eine vorbestimmte Abmessung aufweist.

2. Baugruppe nach Anspruch 1, dadurch gekennzeichnet, daß sie Dreiweg-Flüssigkeitsführungsvorrichtungen (11, 33) umfaßt, die jeweils gebildet sind aus einem T-förmigen Hohlraum, der waagerecht liegt und dessen oberer rohrförmiger Endbereich (14, 38) des Balkens des T einen ersten Zweig bildet und an einen der entsprechenden Ausgänge dieser Baugruppe angeschlossen ist, während der rohrförmige untere Endabschnitt (15, 39) einen zweiten Zweig bildet und entweder mit dem rohrförmigen zentralen Teil (16, 37) verbunden ist, welcher den Körper des T der darauffolgenden Vorrichtung bildet, oder im Fall der letzten der in Kaskade angeordneten Führungsvorrichtungen mit dem letzten Ausgang dieser Baugruppe verbunden ist, und der zentrale rohrförmige Teil (16, 37), welcher den Körper des T bildet, einen dritten Zweig bildet, welcher entweder mit dem unteren rohrförmigen Endabschnitt der vorausgehenden Vorrichtung verbunden ist oder im Falle der ersten der in Kaskade angeordneten Führungsvorrichtungen mit dem Einlaß der Baugruppe verbunden ist.

3. Baugruppe nach Anspruch 1 oder 2, dadurch gekennzeichnet, daß die T-förmigen Dreiweg-Flüssigkeitsführungsvorrichtungen jeweils in ihrem zentralen, den Balken des T bildenden Körper eine frei Klappe (12, 34) umfassen, welche das Öffnen und das Schließen der Wege gewährleistet, welche durch die Endabschnitte (14, 15, 38, 39) dieser T-Balken gebildet sind, und durch eine Kugel gebildet ist, die aus einem Material gebildet ist, das eine geringere Dichte als die in diese Vorrichtungen eingeleitete Flüssigkeit aufweist, und auf der Höhe der rohrförmigen Endabschnitte dieser T-Balken obere und untere Ventilsitze (17, 18, 35, 36) für diese Klappe umfassen.

4. Baugruppe nach einem der Ansprüche 1 bis 3, dadurch gekennzeichnet, daß sie Flüssigkeitsführungsvorrichtungen (11) umfaßt, die sich miteinander auf derselben Höhe befinden.

5. Baugruppe nach Anspruch 1 oder 2, dadurch gekennzeichnet, daß sie Flüssigkeitsführungsvorrichtungen (33) umfaßt, die derart angeordnet sind, daß eine beliebige von ihnen sich auf einer geringeren Höhe als die darauffolgende Vorrichtung und auf einer größeren Höhe als die vorausgehende Vorrichtung befindet.

6. Baugruppe nach einem der Ansprüche 1 bis 5, dadurch gekennzeichnet, daß sie stromabwärts von den Flüssigkeitsführungsvorrichtungen (11) zwischen dem rohrförmigen unteren Endabschnitt (15) der Balken des T einer Führungsvorrichtung und einem Verbindungskanal eine Düse (26) umfaßt, die von einem Abströmhohlraum umgeben ist, welcher eine Vorrichtung mit Venturieffekt bildet.

7. Baugruppe nach einem der Ansprüche 1, 2 und 5, dadurch gekennzeichnet, daß sie Ausgänge (30, 31, 32) umfaßt, die jeweils in Form eines Siphon verwirklicht sind.

8. Baugruppe nach Anspruch 7, dadurch gekennzeichnet, daß die T-förmigen Dreiweg-Flüssigkeitsführungsvorrichtungen (11, 33) jeweils in ihrem zentralen, den Balken des T bildenden Körper eine freie Klappe (12, 34) umfassen, die durch eine Kugel gebildet ist, welche aus einem Material mit einer Dichte hergestellt ist, die ungefähr derjenigen der in diese Vorrichtungen eingeleiteten Flüssigkeit entspricht.

9. Baugruppe nach Anspruch 7, dadurch gekennzeichnet, daß sie siphonförmige Ausgänge umfaßt, deren freie Enden (30, 31, 32) pfeifenförmig abgeschnitten sind.

10. Baugruppe nach Anspruch 1, dadurch gekennzeichnet, daß sie Dreiweg-Flüssigkeitsführungsvorrichtungen (52) umfaßt, die jeweils gebildet sind aus einem Hohlraum in Form eines waagerecht liegenden T mit einem senkrechten Teil (54), der die Balken des T bildet und an deren Endzonen mit zwei waagerechten rohrförmigen Teilen versehen ist, von denen das eine (56) den ersten Zweig bildet, der an einen ersten Ausgang (49) dieser Baugruppe angeschlossen ist, und das andere (57) den zweiten Zweig bildet, der entweder über ein Rohrsystem (63) mit dem zentralen rohrförmigen waagerechten Teil (55) verbunden ist, welcher den Körper des T der darauffolgenden Vorrichtung (52) bildet, oder im Falle der letzten (52) der in Kaskade angeordneten Führungsvorrichtungen an den letzten Ausgang (51) dieser Baugruppe über ein Rohrsystem (64) angeschlossen ist, während der zentrale rohrförmige waagerechte Teil (55), welcher den Körper des T darstellt, den dritten Zweig bildet, der entweder an den zweiten Zweig der vorausgehenden Vorrichtung (52) oder im Fall der ersten der in Kaskade angeordneten Führungsvorrichtungen mit dem Einlaß (48) dieser Baugruppe verbunden ist.

11. Baugruppe nach Anspruch 10, dadurch gekennzeichnet, daß das Rohrsystem (63, 64), welches an den zweiten Zweig der Führungsvorrichtung (52) angeschlossen ist, eine Vorrichtung (69) mit Flüssigkeitsleck umfaßt, die aus einem Rohr oder rohrförmigen Hohlraum gebildet ist, der mit einer Lecköffnung (70), deren Durchmesser in Abhängigkeit von der Entleerungszeit der Führungsvorrichtung (52) bestimmt ist, und wenigstens einer Flüssigkeitsladung (71) versehen ist, die imstande ist, die Kapillarspannungen im Bereich der Lecköffnungen (70) zu überwinden.

12. Baugruppe nach Anspruch 11, dadurch gekennzeichnet, daß das Rohrsystem (63, 64) eine Vorrichtung (69) mit Flüssigkeitsleck umfaßt, die durch ein Rohr mit einem Durchmesser von 8 mm gebildet ist, das eine Lecköffnung (70) von 0,60 mm aufweist und wenigstens eine Flüssigkeitsladung (71) von 48 mm Höhe (72) enthalten kann.

13. Baugruppe nach Anspruch 11, dadurch gekennzeichnet, daß das Rohrsystem (63, 64) in dem Rohr, welches seine Vorrichtung (69) mit Flüssigkeitsleck bildet, eine diametrale dichte Trennwand (73) umfaßt, deren Ende in die Flüssigkeitsladung (71) eingetaucht ist und welche den oberen Bereich dieses Rohres (69) in zwei Bereiche unterteilt.

14. Baugruppe nach einem der Ansprüche 10 bis 13, dadurch gekennzeichnet, daß das Rohrsystem (63, 64) stromaufwärts von seiner Vorrichtung (69) mit Flüssigkeitsleck einen Siphon (74) umfaßt, der einen Flüssigkeitsinhalt aufweist, der wenigstens gleich einem Flüssigkeitsvolumen ist, welches durch die Klappe (53) verdrängt wird.

15. Baugruppe nach einem der Ansprüche 1, 2 und 10, dadurch gekennzeichnet, daß sie am Ende ihres ersten Ausgangs (49) eine Düse (68) umfaßt, deren Durchmesser kleiner als derjenige dieses ersten Ausgangs ist.

16. Baugruppe nach Anspruch 15, dadurch gekennzeichnet, daß sie einen ersten Ausgang (49) mit einem Durchmesser von 8 mm und eine Düse (68) mit einem Durchmesser von 5 mm aufweist.

17. Baugruppe nach einem der Ansprüche 1, 2, 10 und 15, dadurch gekennzeichnet, daß sie einen Flüssigkeitsbehälter (65) umfaßt, der durch ein Rohr (67) an einen Punkt angeschlossen ist, welcher stromaufwärts von dem Ausgang (49, 50) liegt, der an den ersten Zweig der Dreiweg-Führungsvorrichtungen (52) angeschlossen ist.

18. Baugruppe nach Anspruch 17, dadurch gekennzeichnet, daß sie ein Kapillarrohr (75) umfaßt, welches die obere Zone der Führungsvorrichtung (52) mit der oberen Zone des Flüssigkeitsbehälters (65) verbindet.

19. Baugruppe nach Anspruch 18, dadurch gekennzeichnet, daß sie ein Kapillarrohr (75) umfaßt, dessen Durchmesser zwischen 0,60 mm und 0,30 mm beträgt und welches den Flüssigkeitsbehälter (65) mit der Führungsvorrichtung (52) verbindet.

20. Baugruppe nach den Ansprüchen 1, 2 und 10, dadurch gekennzeichnet, daß sie am Ende ihres ersten Ausgangs (49) einen Korb (77) umfaßt, der mit mehreren Löchern versehen ist, die einen Durchmesser aufweisen, der kleiner ist als derjenige dieses ersten Ausgangs (49).

21. Baugruppe nach Anspruch 20, dadurch gekennzeichnet, daß sie am Ende ihres ersten Ausgangs (49) einen Korb (77) umfaßt, der mit Löchern versehen ist, die einen Durchmesser zwischen 2 mm und 4 mm aufweisen.

22. Baugruppe nach den Ansprüchen 1, 2 und 10, dadurch gekennzeichnet, daß sie am Ende ihres ersten Ausgangs (49) einen mit Flüssigkeit angefüllten Siphon (79) umfaßt.

23. Baugruppe nach den Ansprüchen 1, 2 und 10, dadurch gekennzeichnet, daß sie am Ende ihres ersten Ausgangs (49) einen Flüssigkeitstrog (80) umfaßt, der mit einer Entleerungsöffnung (81) versehen ist.

24. Gerät, welches mit n Flüssigkeitsempfängerorganen und einem Elektroventil (27) versehen ist, das die Steuerung der Flüssigkeitszufuhr gewährleistet, dadurch gekennzeichnet, daß es eine Baugruppe zur Mehrfach-Flüssigkeitseinspeisung mit n Ausgängen umfaßt, die gemäß einem der Ansprüche 1 bis 23 verwirklicht ist und diese n Flüssigkeitsempfängerorgane mit diesem Elektroventil (27) zur Steuerung der Flüssigkeitszufuhr verbindet.

**Claims**

1. Plural fluid-supply assembly comprising a means such as a single simple electrovalve (27) ensuring the control of the fluid admission at its inlet and a connecting system connecting its inlet to its n outlets and comprising a system of flaps controlled by the fluid admitted in accordance with a specific sequence determined by a fixed numer of openings and closings of said electrovalve (27), characterized in that it comprises for permitting the fluid supplying individually and separately of each of said outlets at least, as connecting system between its sole inlet (7 or 29 or 48) and its n outlets, (n − 1) three-way fluid guide devices (11 or 33 or 52), mounted in cascade, and equipped with their own flap controlled individually by the fluid admitted according to a specific sequence determined by a fixed number of openings and closings of said electrovalve (27) of fixed duration, and in the path of the fluid admitted, downstream of each of said guide devices, a hole for establishing communication with the outside (25 or 43, 44 or 70) of predetermined dimension.

2. Assembly according to claim 1, characterized in that it comprises three-way fluid guide devices (11, 33) each constituted by a cavity having the form of a horizontally lying T, of which the upper tubular terminal portion (14, 38) of the arm of the T forms a first way and is connected to one of the corresponding outlets of said assembly, the lower tubular terminal portion (15, 39) forming a second way and being connected either to the central tubular portion (16, 37) representing the body of the T of the following device or, for the last of the guide devices mounted in cascade, to the last of the outlets of the assembly, and the central tubular portion (16, 37) representing the body of the T forming a third way and being connected either to the lower tubular terminal portion of the preceding device or, for the first of the guide devices mounted in cascade, to the inlet of the assembly.

3. Assembly according to any one of claims 1 and 2, characterized in that the three-way T fluid guide devices comprise respectively in their central body representing the arms of the T a free flap (12, 34) ensuring the opening and the closing of the ways represented by the terminal portions (14, 15, 38, 39) of said arms of the T and formed by a ball of a material having a density lower than that of the fluid admitted into said devices, and at the level of the lower tubular terminal portions of said T arms upper and lower seats (17, 18, 35, 36) for said flap.

4. Assembly according to one of claims 1 to 3, characterized in that it comprises fluid guide devices (11) disposed at the same height with respect to each other.

5. Assembly according to one of claims 1 and 2, characterized in that it comprises fluid guide devices (33) disposed such that any one of them is disposed at a level lower than that of the following device and higher than that of the preceding device.

6. Assembly according to one of claims 1 to 5, characterized in that it comprises downstream of the fluid guide devices (11), between the lower tubular terminal portion (15) of the arms of the T of one guide device and a junction passage, a nozzle (26) surrounded by an escape cavity forming venturi effect means.

7. Assembly according to one of claims 1, 2 and 5, characterized in that it comprises outlets (30, 31, 32) realized respectively in the form of a siphon.

8. Assembly according to claim 7, characterized in that the three-way T fluid guide devices (11, 33) comprise respectively, in their central bodies representing the arms of the T, a free flap (12, 34) formed by a ball made in a material having a density approximate to that of the fluid admitted into said devices.

9. Assembly according to claim 7, characterized in that it comprises outlets in the form of siphons having free ends cut slantwise (30, 31, 32).

10. Assembly according to claim 1, characterized in that it comprises three-way fluid guide devices (52) each formed by a cavity in the form of a T lying horizontally, having a vertical portion (54) representing the arms of the T and equipped in the end zones thereof with two horizontal tubular portions, one (56) forming the first way connected to a first outlet (49) of said assembly and the other (57) forming the second way connected either to the horizontal tubular central portion (55) representing the body of the T of the following device (52) via a tubular system (63), or, for the last of the guide devices (52) mounted in cascade, to the last (51) of the outlets of said assembly via a tubular system (64) and the horizontal tubular central portion (55) representing the body of the T forming the third way connected either to the second way of the preceding device (52) or, for the first of the guide devices mounted in cascade, to the inlet (48) of the assembly.

11. Assembly according to claim 10, characterized in that the tubular system (63, 64) connected to the second way of the guide device (52) comprises a fluid escape means (69) formed by a tube or tubular cavity equipped with an escape orifice (70) having a diameter determined as a function of the emptying time of the guide device (52) and with at least one fluid charge (71) able to overcome the capillary tensions at the level of the escape orifice (70).

12. Assembly according to claim 11, characterized in that the tubular system (63, 64) comprises a fluid escape means (69) formed by a tube having a diameter of 8 mm equipped with an escape orifice (70) of 0.60 mm, and able to contain at least one fluid charge (71) of 48 mm height (72).

13. Assembly according to claim 11, characetized in that the tubular system (63, 64) comprises in the tube forming its fluid escape means (69) a diametrical fluid-tight partition (73) of which the end is immersed in the fluid charge (71) and which divides the upper portion of said tube (59) in two.

14. Assembly according to one of claims 10 to 13, characterized in that the tubular system (63, 64) comprises upstream of its fluid escape means (69) a siphon (74) having a liquid content at least equal to a volume of fluid displaced by the flap (53).

15. Assembly according to one of claims 1, 2 and 10, characterized in that it comprises at the end of its first outlet (49) a nozzle (68) having a diameter less than that of said first outlet.

16. Assembly according to claim 15, characterized in that it comprises a first outlet (49) having a diameter of 8 mm and a nozzle (68) having a diameter of 5 mm.

17. Assembly according to one of claims 1, 2, 10 and 15, characterized in that it comprises a fluid reservoir (65) connected to a point upstream of the outlet (49, 50) branched to the first way of the three-way guide device (52) via a tube (67).

18. Assembly according to claim 17, characterized in that it comprises a capillary tube (75) connecting the upper zone of the guide device (52) to the upper zone of the fluid reservoir (65).

19. Assembly according to claim 18, characterized in that it comprises a capillary tube (75) having a diameter between 0.60 mm and 0.30 mm connecting the fluid reservoir (65) to the guide device (52).

20. Assembly according to claims 1, 2 and 10, characterized in that it comprises at the end of its first outlet (49) a basket (77) equipped with a plurality of holes having a diameter less than that of said first outlet (49).

21. Assembly according to claim 20, characterized in that it comprises at the end of its first outlet (49) a basket (77) equipped with holes having a diameter between 2 mm and 4 mm.

22. Assembly according to claims 1, 2 and 10, characterized in that it comprises at the end of its first outlet (49) a siphon (79) filled with fluid.

23. Assembly according to claims 1, 2 and 10, characterized in that it comprises at the end of its first outlet (49) a fluid trough (80) equipped with a discharge orifice (81).

24. Apparatus equipped with n fluid receiving means and an electrovalve (27) ensuring the control of the fluid admission, characterized in that it comprises a plural fluid-supply assembly with n outlets realized according to any one of claims 1 to 23 which connects said n fluid receiving means to said electrovalve (27) for controlling the fluid admission.

# FIG_1

## FIG_2

# FIG_3

# FIG_4

# FIG_5

0 022 414

0 022 414

FIG_6

FIG_7

19

# FIG_8

49

77

78

# FIG_9

78

77

# FIG_10

49

79

# FIG_11

49

80

81